Europäisches Patentamt

European Patent Office

Office européen des brevets

(11) Publication number: **0 276 031**
**A1**

## EUROPEAN PATENT APPLICATION

(21) Application number: 88200024.3

(22) Date of filing: 08.01.88

(51) Int. Cl.⁴: **A 01 K 1/01**
**A 01 K 31/04**

(30) Priority: 08.01.87 NL 8700024

(43) Date of publication of application:
27.07.88 Bulletin 88/30

(84) Designated Contracting States:
AT BE CH DE ES FR GB GR IT LI LU NL SE

(71) Applicant: **Custers, Leonardus Cornelis Johannes**
**Laurentiusstraat 20**
**NL-5821 AW Vierlingsbeek (NL)**

(72) Inventor: **Custers, Leonardus Cornelis Johannes**
**Laurentiusstraat 20**
**NL-5821 AW Vierlingsbeek (NL)**

(74) Representative: **Noz, Franciscus Xaverius, Ir.**
**Algemeen Octrooibureau P.O. Box 645**
**NL-5600 AP Eindhoven (NL)**

(54) Device for separating and discharging manure.

(57) Device for separating and discharging manure, produced in e.g. a mink breeding farm or a fox farm, said device being provided under the grid on which the animals are present and consisting of a bin of upright walls and a floor, whereby rotatable bars are provided between the longitudinal sides of the upright walls, well above the floor, and a netting, permeable to liquid, is provided, said netting being movable as a conveyor belt in the longitudinal direction of the bin, characterized in that the assembly of rotatable bars has a hinged or removable connection to the side wall.

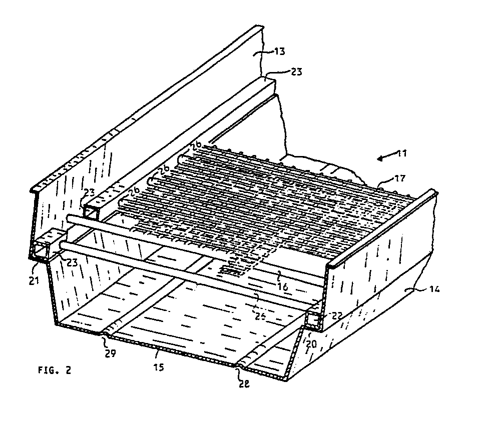

FIG. 2

EP 0 276 031 A1

INCOMPLETE DOCUMENT

**Description**

### Device for separating and discharging manure

The invention relates to a device for separating and discharging manure, produced in e.g. a mink breeding farm or a fox farm, said device being provided under the grid on which the animals are present and consisting of a bin of upright walls and a floor, whereby rotatable bars are provided between the longitudinal sides of the upright walls, well above the floor, and a netting, permeable to liquid, is provided, said netting being movable as a conveyor belt in the longitudinal direction of the bin.

Such a device is known from the German Gebrauchsmuster G 85 22 990.3, published on 28 November 1985, the applicant being one of the patentees. The embodiment which is the subject of the German Gebrauchsmuster mentioned is illustrated in the present patent application as fig 1 and the text of the German Gebrauchsmuster may be considered as inserted here for further explanation of the known state of the art. The known device provides a good separation of the manure, produced by minks, foxes and other comparatively small animals which are bred in factory farming, because the liquid and the solid components of the manure are separated immediately and these components can be won separately for further processing. A disadvantage of the known construction, however, is that the bin in which the liquid components are collected, especially its floor, is difficult to clean and it is also difficult to carry out maintenance activities with this known device.

These disadvantages have now been eliminated with the device according to the present invention and it is characterized in that the assembly of rotatable bars has a hinged or removable connection to the side wall. Preferably the bars are provided in an auxiliary profile which is arranged in a widened part of the side wall.

A preferential embodiment of a device according to the invention is further explained in the drawing, whereby:

    fig 1 is an embodiment of the known device and

    fig 2 is a perspective illustration of a preferential embodiment according to the invention.

Fig 1 illustrates the known device 1, consisting of the side walls 3 and 4 with the bottom 5 therebetween. Between the side walls the rotatable bars 6 are provided and on the rotatable bars 6 there is provided the netting 7 permeable to liquid. When the netting 7 is substantially loaded with solid droppings, a cleaned netting 7 is pulled between the wall parts 3 and 4 and the netting filled with solid droppings is removed. Thus a new netting can be provided above the floor part 5 at any desired moment.

With the device according to the invention as illustrated in fig 2 a bin 11 is illustrated, consisting of upright walls 13 and 14 and a bottom 15, whereby widenings 20 and 21 are provided in the side walls 13 and 14. On the widenings 20 and 21 there is arranged a profile, indicated by 22 and 23 respectively, between which profile the bars 26 can be mounted rotatably. This provides an operation of the device as is possible with the known device illustrated in fig 1, but the maintenance and the cleaning of the device has now been considerably simplified because the bar construction is removable from the bin. According to a preferential embodiment it is possible to provide a bar 16 directly between the side walls at certain distances, without making use of a profile, which bar 16 cannot simply be removed easily from the device, said bar 16 serving to reinforce the construction of the device. Also there are provided reinforcing ribs 28 and 29 in the bottom part.

It will be apparent that it will also be possible to provide the bars 26 at one side in a profile 23 and make them pivot in the wall 14 at the other side. Other modifications and embodiments are to be considered as being within the framework of the invention and are therefore within the scope of the invention as long as these modifications are to be read within that which is laid down in the claims.

Preferably elements are made wich can be arranged in the bin 11 along a length of 40 - 100 cm, said elements consisting of the profile (22, 23) with bars 26 therebetween. The length of 40 - 100 cm has been chosen in order to obtain easily handled elements.

**Claims**

1. Device for separating and discharging manure, produced in e.g. a mink breeding farm or a fox farm, said device being provided under the grid on which the animals are present and consisting of a bin of upright walls and a floor, whereby rotatable bars are provided between the longitudinal sides of the upright walls, well above the floor, and a netting, permeable to liquid, is provided, said netting being movable as a conveyor belt in the longitudinal direction of the bin, characterized in that the assembly of rotatable bars has a hinged or removable connection to the side wall.

2. Device according to claim 1, characterized in that the bars are provided in an auxiliary profile which is arranged in a widened part of the side wall.

3. Device according to claims 1 - 2, characterized in that the auxiliary profile with bars in elements of 40 - 100 cm is arranged in or on the side wall and is alternated with at least one bar for the reinforcement of the bin, said bar not being removable via an auxiliary profile.

4. Device according to claims 1 - 3, characterized in that reinforcing ribs are provided in the bottom of the bin.